# DEMANDE DE BREVET EUROPEEN

(11) **EP 1 463 148 A1**
(43) Date de publication de la demande: **29.09.2004**
(21) Numéro de dépôt: 03100844.4
(22) Date de dépôt: 31.03.2003
(51) Int. Cl.: H01Q 7/00, H01Q 1/22, H01Q 1/32

(54) **Antenne réceptrice morcelée**

(30) Priorité: 02.04.2002 FR 0204065
(71) Demandeur: COMMISSARIAT A L'ENERGIE ATOMIQUE, 75752 Paris Cédex 15 (FR)
(72) Inventeur: ROBINET, Antoine, 38000, GRENOBLE (FR); THOMAS, Thierry, 38760, VARCES (FR)
(74) Mandataire: Poulin, Gérard

(57) **Abrégé**

Il s'agit d'une antenne réceptrice (2) d'un dispositif de réception (1) qui inclut un objet (10) destiné à être télécontrôlé par couplage électromagnétique avec au moins une antenne émissive (8). Cette antenne réceptrice (2) est destinée à être reliée à l'objet (10), elle est morcelée en plusieurs parties en boucle (2.1, 2.2) agencées en un montage parallèle, ces parties en boucle (2.1, 2.2) ayant chacune une surface (s1, s2), ces surfaces (s1, s2) étant globalement juxtaposées de manière à ce que les parties en boucle (2.1, 2.2) se couplent successivement et continûment à l'antenne émissive (8).

Application à la transmission à distance.

## Description

### DOMAINE TECHNIQUE

La présente invention est relative à une antenne dite réceptrice d'un dispositif de réception incluant un objet télécontrôlé depuis un dispositif émissif. Le dispositif de réception et le dispositif émissif communiquent sans contact, ce qui est particulièrement intéressant s'ils sont animés d'un mouvement relatif l'un par rapport à l'autre.

Le domaine d'application peut être par exemple les pneumatiques, les machines outils, l'imprimerie, le comptage de choses ou de personnes, etc.

### ETAT DE LA TECHNIQUE ANTERIEURE

Le dispositif émissif est destiné à transmettre de l'énergie et/ou des informations vers l'objet qui peut être un capteur, un compteur ou un dispositif réalisant une autre fonction. L'objet est destiné, le cas échéant, à communiquer des données par exemple des signaux relatifs aux mesures, au comptage ou autres, au dispositif émissif.

L'objet est donc relié à au moins une première antenne inductive dite réceptrice qui doit se coupler électromagnétiquement avec au moins une seconde antenne inductive dite émissive du dispositif émissif. Ce dispositif émissif va alimenter en énergie l'objet et/ou piloter son fonctionnement et le cas échéant récupérer les données qu'il lui fournit. Les deux antennes sont formées d'un conducteur en boucle agencée en une ou plusieurs spires. Les deux antennes vont communiquer aux abords d'une fréquence de travail ft. Le principe est de générer depuis le dispositif émissif un champ électromagnétique à la fréquence de travail ft par l'intermédiaire duquel de l'énergie et/ou des informations vont être transmises.

L'énergie est transmise par la porteuse, elle est fonction de l'amplitude de cette dernière.

Le dispositif émissif comporte, en plus de l'antenne émissive, des moyens électroniques pour générer la fréquence de travail ft et un étage de modulation afin de pouvoir transmettre sous forme électromagnétique les informations aux abords de la fréquence de travail vers l'objet. Les informations sont transmises par la modulation de cette même porteuse, elle peut être d'amplitude, de fréquence, de phase.

Le dispositif émissif peut comporter également des moyens pour traiter les données reçues de l'objet.

Le dispositif de réception comporte, lui, coopérant avec l'objet un moyen de mise en forme des signaux reçus, ce moyen pouvant comprendre un circuit redresseur.

La demande de brevet FR-A1-2 771 965 décrit un dispositif de réception avec une antenne réceptrice reliée à un capteur, l'antenne et le capteur sont implantés dans un pneumatique. L'antenne est destinée à se coupler électromagnétiquement avec une autre antenne située à l'extérieur du pneumatique. L'antenne réceptrice de forme rectangulaire lorsqu'elle est mise à plat, s'étend le long de la périphérie du pneumatique sous sa bande de roulement.

La fréquence de travail ft est un paramètre important car elle conditionne les caractéristiques de l'antenne réceptrice du dispositif récepteur et celles de l'antenne émissive du dispositif émissif. L'antenne réceptrice possède une fréquence d'auto résonance qui est fonction de ses caractéristiques intrinsèques, c'est à dire de la résistance de son conducteur, de la longueur de son conducteur, de la valeur de la capacité intrinsèque répartie le long de son conducteur, de sa surface, c'est à dire de la surface d'une spire de son conducteur et de caractéristiques externes liées à son environnement telles que la grandeur des capacités parasites, la propension du milieu à canaliser les lignes de champ magnétique.

Pour fonctionner de manière optimale l'antenne réceptrice du dispositif récepteur doit être accordée sur la fréquence de travail ft. L'accord se fait d'habitude à l'aide d'un condensateur d'accord monté en parallèle avec l'antenne. A l'accord, la relation suivante est vérifiée :

LC(2πft)² = 1 avec L inductance de l'antenne réceptrice, C capacité globale de l'antenne réceptrice. Ces grandeurs L et C sont les grandeurs équivalentes à la fréquence de travail vues par le dispositif de réception. Par exemple C sera la somme de toutes les capacités mises en jeu au niveau de l'antenne réceptrice : capacité intrinsèque de l'antenne, capacité parasite et capacité du condensateur d'accord.

Parmi des fréquences de travail autorisées par les normes AFNOR et qui correspondent aux bandes ISM on choisit une fréquence de travail de l'ordre de la dizaine de mégahertz, avec une fréquence plus élevée il serait plus difficile de transmettre de l'énergie et avec une fréquence plus basse, le débit d'informations serait trop faible. Compte tenu de cette fréquence de travail, des faibles niveaux de puissance mis en jeu lors de la transmission avec le dispositif émissif, du bruit ambiant et de l'encombrement réduit imposé au dispositif émissif, la surface de l'antenne réceptrice du dispositif récepteur est grande devant celle de l'antenne émissive du dispositif émissif.

Cela se traduit par une fréquence d'auto résonance qui est inférieure à la fréquence de travail ft, par une forte inductance et par une forte capacité intrinsèque répartie le long du conducteur et vue par l'objet. Il existe de plus, bien souvent, d'importantes capacités parasites dues à l'environnement de l'antenne. C'est le cas notamment dans le domaine des pneumatiques ou dans le domaine de l'imprimerie, par exemple, où des éléments métalliques jouxtent inévitablement l'antenne réceptrice. Des antennes de forme particulière par exemple longue et étroite conduisent également à une réduction de la fréquence d'auto résonance.

Si la fréquence d'auto résonance de l'antenne réceptrice est trop basse vis à vis de la fréquence de travail ft, on ne peut pas accorder l'antenne réceptrice du dispositif récepteur sur la fréquence de travail ft car la valeur de sa capacité intrinsèque est déjà trop importante pour obtenir l'accord. L'ajout d'un condensateur d'accord viendrait encore aggraver la situation. Si l'accord n'est pas obtenu, le couplage entre l'antenne réceptrice et l'antenne émissive ne peut être optimum et le rendement de la transmission n'est pas bon. Il n'est pas envisageable non plus de réduire la surface de l'antenne réceptrice pour essayer d'obtenir l'accord, cela détériorerait la qualité du couplage.

### EXPOSÉ DE L'INVENTION

La présente invention vise à pallier les inconvénients mentionnés ci-dessus, et notamment vise à obtenir aisément l'accord entre les antennes réceptrices et émissives dans un grand nombre de configurations et d'environnement sans à avoir à réduire la surface de l'antenne réceptrice reliée à l'objet ou à abaisser la fréquence de travail.

Pour y parvenir la présente invention a pour objet une antenne réceptrice d'un dispositif de réception qui inclut au moins un objet destiné à être télécontrôlé par couplage électromagnétique avec au moins une antenne émissive. L'antenne réceptrice est destinée à être reliée à l'objet et est morcelée en plusieurs parties en boucle agencées en un montage parallèle. Les parties en boucle ont chacune une surface et ces surfaces sont globalement juxtaposées de manière à ce que les parties en boucle se couplent successivement et continûment à l'antenne émissive.

L'antenne réceptrice possède une surface utile de réception et la somme des surfaces de toutes les parties en boucle est sensiblement égale à la surface utile de l'antenne réceptrice.

Avec une telle structure, la surface de l'antenne réceptrice est avantageusement beaucoup plus grande que celle de l'antenne émissive.

Pour assurer un bon couplage avec l'antenne émissive, il est préférable que, les parties en boucle étant formées d'un conducteur, une portion de conducteur d'une première partie en boucle et une portion de conducteur d'une seconde partie en boucle, voisine de la première partie en boucle, soient séparées par un espace aussi faible que possible.

De la même manière, il est préférable que deux parties en boucle soient séparées, du côté de l'objet, par un espace aussi faible que possible.

Pour faciliter l'accord entre l'antenne émissive et l'antenne réceptrice, un condensateur d'accord peut être monté en parallèle avec au moins une des parties en boucle. L'antenne est avantageusement blindée pour diminuer son rayonnement électrique, notamment à proximité de l'objet.

La présente invention concerne également un dispositif de réception qui comporte au moins une antenne réceptrice ainsi définie.

Il est préférable que dans un tel dispositif de réception, l'antenne réceptrice soit reliée à l'objet par l'intermédiaire d'un moyen de mise en forme incluant au moins un circuit redresseur.

Le moyen de mise en forme peut comporter un circuit redresseur unique, les parties en boucle ayant au moins une extrémité reliée en entrée du circuit redresseur, l'objet étant relié en sortie du circuit redresseur.

Dans un autre mode de réalisation, le moyen de mise en forme peut comporter plusieurs circuits redresseurs, chaque partie en boucle ayant au moins une extrémité reliée en entrée d'un des circuits redresseurs, les circuits redresseurs ayant leurs sorties reliées en série avec l'objet.

Un tel dispositif de réception peut être animé d'un mouvement relatif par rapport à l'antenne émissive.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
la figure 1A montre un exemple d'antenne réceptrice selon l'invention dans une application de pneumatique ;
la figure 1B montre un exemple d'antenne réceptrice de l'art antérieur ;
les figures 2A, 2B, 2C, 2D montrent plusieurs variantes de connexion entre l'antenne réceptrice et l'objet à télécontrôler ;
les figures 3A, 3B montrent respectivement un autre exemple d'antenne réceptrice selon l'invention et un détail de sa connexion avec l'objet ;
la figure 4 montre un exemple d'antenne réceptrice plane et circulaire ;
la figure 5 montre un exemple d'antenne réceptrice dont la surface est une portion de surface latérale d'un cylindre à directrice ellipsoïdale ;
la figure 6 montre un exemple de dispositif de réception selon l'invention dans une application de comptage ou d'identification de véhicules.

Sur ces figures, les éléments identiques sont désignés par les mêmes caractères de référence et les échelles ne sont pas respectées.

### EXPOSÉ DÉTAILLÉ DE MODES DE RÉALISATION PARTICULIERS

On va se référer maintenant à la figure 1A. On distingue un dispositif de réception 1 comportant au moins un objet 10 destiné à être télécontrôlé depuis un dispositif émissif 7. Le télécontrôle signifie soit une alimentation en énergie à distance de l'objet, soit une communication à distance entre l'objet et le dispositif émissif, soit les deux fonctions.

L'objet 10 est destiné à être relié à au moins une antenne inductive réceptrice 2 devant se coupler de manière électromagnétique à au moins une autre antenne inductive émissive 8 du dispositif émissif 7.

L'objet peut être par exemple un capteur, un compteur ou encore une étiquette électronique. L'objet, ainsi que le circuit électronique qui lui est adapté, peuvent être avantageusement blindés en champ électrique.

L'antenne réceptrice 2 reliée à l'objet est formée de plusieurs parties en boucle 2.1, 2.2. Les différentes parties en boucle 2.1, 2.2 sont agencées en un montage parallèle. Sur toutes les figures, les parties en boucle sont représentées formées d'un conducteur 9 agencé en une seule spire, il est bien entendu qu'elles pourraient en avoir plusieurs.

Chacune des parties en boucle 2.1, 2.2 possède une surface qui correspond à la surface d'une spire et ces surfaces référencées s1, s2 sont globalement juxtaposées. Cela signifie que grosso modo leurs surfaces sont côte à côte et non pas en vis à vis. Les parties en boucle 2.1, 2.2 se couplent alors successivement et continûment à l'antenne émissive 8. Le couplage peut alors être continu quelle que soit la position relative entre le dispositif émissif 7 et le dispositif de réception 1.

L'antenne réceptrice 2 possède alors une surface utile de réception s sensiblement égale à la somme des surfaces s1, s2 des différentes parties en boucle 2.1, 2.2. Par surface utile, on entend la surface maximale qui sert effectivement pour la transmission et pour laquelle les pertes en ligne sont acceptables.

Lorsque l'antenne réceptrice 20 n'est pas morcelée comme dans l'art antérieur, sa surface n'est pas totalement utile. On peut se référer à la figure 1B. Une antenne réceptrice 20 conventionnelle, de grande taille, sensiblement rectangulaire et une antenne émissive 80 sensiblement en carré sont couplées l'une avec l'autre, elles sont en vis à vis et sensiblement planes. L'antenne réceptrice 20 est reliée à un objet 10. Lorsque les deux antennes 20, 80 sont couplées, un courant électrique circule dans l'antenne réceptrice 20. Mais lorsque l'antenne émissive 80 est loin de la connexion entre l'antenne réceptrice 20 et l'objet 10 (position 1), à cause des pertes en ligne inévitables dues notamment à des capacités parasites, pratiquement aucun signal n'arrive à l'objet, le couplage n'est pas satisfaisant. Par contre, lorsque l'antenne émissive 80 se trouve près de la connexion entre l'antenne réceptrice 20 et l'objet 10 (position 2), le signal arrive correctement à l'objet 10 pratiquement sans pertes. L'antenne réceptrice 20 possède une zone inutile qui est matérialisée par des hachures, sa surface utile est plus petite que sa surface réelle. Dans l'invention en morcelant l'antenne réceptrice, on supprime cette zone inutile.

On suppose que l'exemple de la figure 1A est relatif au domaine des pneumatiques. Dans ce domaine, le dispositif émissif 7 serait extérieur au pneumatique, situé par exemple sur le véhicule proprement dit, ce dispositif émissif 7 peut inclure la batterie du véhicule pour l'alimentation en énergie et être doté d'une antenne émissive 8. L'antenne émissive 8 peut être située dans l'aile du véhicule pour être en vis à vis de l'antenne réceptrice 2. L'objet 10 peut comporter par exemple au moins un dispositif de mesure de type capteur de force, capteur de température, capteur de pression et/ou au moins un dispositif de contrôle.

Chacune de ces parties en boucle 2.1, 2.2 sera située sous la bande de roulement du pneumatique.

La surface s de l'antenne réceptrice 2 est sensiblement une surface latérale d'un cylindre de révolution, elle correspond sensiblement à la surface de la bande de roulement du pneumatique. Le conducteur 9 des parties en boucle 2.1, 2.2 prend une forme sensiblement rectangulaire lorsqu'il est mis à plat et, en position, il s'étend sur des portions de surface latérale du cylindre de révolution. Une portion 1 du conducteur 9, correspondant au grand côté du rectangle, suit la périphérie du pneumatique et une portion m du conducteur 9, correspondant au petit côté, suit sa largeur. Dans l'exemple décrit avec deux parties en boucle 2.1, 2.2 sensiblement identiques, les petits côtés des rectangles valent environ de 10 à 10,5 centimètres soit un peu moins que la largeur d'un pneumatique standard, tandis que leurs grands côtés valent environ 1 mètre soit environ la moitié de la longueur de la bande de roulement.

Les différentes parties en boucle 2.1, 2.2 ont été représentées identiques mais ce n'est pas une obligation, elles peuvent avoir des formes et/ou des tailles différentes comme on le verra sur la figure 5, cependant la symétrie des parties en boucle est conseillée.

En morcelant l'antenne réceptrice 2 en plusieurs parties en boucle 2.1, 2.2, agencées en un montage parallèle et en juxtaposant leurs surfaces, on ne modifie pratiquement pas sa surface et on augmente sa surface utile par rapport à celle d'une antenne classique unique (telle que celle montrée dans la demande de brevet FR-A1-2 771 965 qui occupait sensiblement toute la surface de la bande de roulement), par contre on réduit la capacité intrinsèque de l'antenne réceptrice 2 vue par l'objet 10 ainsi que la valeur de son inductance.

Lorsque les différentes parties en boucle 2.1, 2.2 ont la même longueur, la capacité intrinsèque de l'antenne réceptrice 2 vaut sensiblement celle de l'une des parties en boucle, c'est à dire que par rapport à une antenne unique de l'art antérieur comme celle décrite dans la demande FR-A1-2 771 965, on a divisé sa capacité intrinsèque par le nombre de parties en boucle.

En réduisant la capacité intrinsèque de l'antenne réceptrice 2, par son morcellement, la fréquence d'auto résonance de chacune des parties est nettement plus élevée que celle de l'antenne unique de surface équivalente à la surface de l'ensemble des parties. Il est alors possible de travailler à une fréquence de travail plus élevée qu'avant.

On atteint alors l'accord soit directement par le choix du nombre de parties en boucle et/ou par le choix de la géométrie des parties en boucle, soit grâce à l'association d'au moins un condensateur d'accord monté en parallèle avec l'une des parties en boucle. Aucun condensateur d'accord n'est visible sur la figure 1A mais on peut se reporter à la figure 3B pour en apercevoir un.

A l'inverse, le fait d'utiliser une antenne morcelée peut permettre d'augmenter la surface en utilisant plusieurs parties en boucle dont les surfaces sont du même ordre de grandeur que celle de l'antenne unique conventionnelle.

L'objet 10 peut être situé dans la bande de roulement du pneumatique, du côté de ses éléments de sculpture tout en restant dans une zone non usante de celle-ci de manière à garantir son fonctionnement pendant toute la durée de vie du pneumatique.

Sur la figure 1A, les parties en boucle 2.1, 2.2 de l'antenne comportent deux extrémités 3 devant être reliées électriquement à l'objet 10, ces extrémités 3 sont orientées sensiblement transversalement à la bande de roulement. Les deux extrémités 3 sont situées au niveau d'une portion m de conducteur 9 correspondant à un petit côté du rectangle. Un espace 4 aussi faible que possible sépare, du côté de l'objet 10, deux parties en boucle 2.1, 2.2. Cet espace vaut par exemple environ 0,5 à 1 centimètre.

De la même manière, comme le montre la figure 1A, du côté opposé à l'objet 10, un espace 5 sépare deux portions m de conducteur 9 appartenant à des parties en boucle voisines. Cet espace 5 est choisi aussi faible que possible, par exemple de l'ordre de 0,1 à 0,3 centimètre. Ce qui importe bien sûr est que les différentes parties en boucle 2.1, 2.2 soient sans contact électrique.

L'antenne émissive 8 du dispositif émissif 7 a une surface plus petite que celle de l'antenne réceptrice 2. Dans cette application, elle pourrait avoir des dimensions d'environ 10 centimètres par 20 centimètres et la fréquence de travail ft pourrait être égale à 13,56 MHz.

On va maintenant s'intéresser à la connexion entre les extrémités 3 des parties en boucle 2.1, 2.2 de l'antenne réceptrice 2 et l'objet 10 et se référer aux figures 2A, 2B. Les parties en boucle 2.1, 2.2 sont représentées mises à plat pour simplifier le dessin. La connexion se fait à travers un moyen de mise en forme 6.

Ce moyen de mise en forme 6 peut comporter un seul circuit de mise en forme 60 comme sur la figure 2A ou plusieurs 60.1, 60.2 comme sur la figure 2B. Ce circuit de mise en forme inclut au moins un circuit redresseur.

Sur la figure 2A, toutes les parties en boucle 2.1, 2.2 de l'antenne réceptrice 2 sont connectées en parallèle à l'entrée du circuit de mise en forme 60, l'objet 10 est connecté lui à la sortie du circuit de mise en forme 60 et son entrée reçoit de ce dernier, une tension redressée qui dépend des tensions apportées à l'entrée du circuit de mise en forme par chacune des parties en boucle 2.1, 2.2.

La connexion en parallèle s'effectue avant redressement au niveau du signal induit dans l'antenne réceptrice.

Sur la figure 2B, chaque partie en boucle 2.1, 2.2 est connectée à l'entrée d'un circuit de mise en forme qui lui est propre, soit respectivement 60.1, 60.2 et les sorties des circuits de mise en forme 60.1, 60.2 coopèrent en série avec l'objet 10 de manière à ce qu'il reçoive la somme des tensions présentes en sortie des différents circuits de mise en forme 60.1, 60.2. En fait, puisque les parties en boucle travaillent successivement et continûment, on n'obtient jamais au niveau de l'objet la somme des signaux induits dans chacune des parties en boucle. En sortie des circuits de mise en forme les signaux sont continus et on peut les sommer, cela n'est pas possible avant leur conversion.

La configuration de la figure 2A avec un seul circuit de mise en forme 60 est plus intéressante du point de vue coût et encombrement mais également du point de vue robustesse aux perturbations. Il vaut mieux faire une seule transformation sur un signal somme que plusieurs suivies d'une sommation.

Par ailleurs, il faut remarquer que les parties en boucle n'ont pas besoin d'être fermées, c'est à dire que les deux extrémités des parties en boucle n'ont pas besoin d'être reliées électriquement à l'objet, une liaison avec une seule de ces extrémités suffit. Les capacités parasites dues à l'environnement assurent le bouclage de la partie en boucle sur l'objet. Les figures 2C et 2D illustrent une telle configuration. Chacune des parties en boucle 2.1, 2.2 possède une extrémité «en l'air » et une extrémité reliée au moyen de mise en forme 6. Les capacités parasites sont schématisées en pointillés.

On va voir maintenant d'autres configurations d'antennes réceptrices conformes à l'invention. On se réfère aux figures 3A, 3B. Il s'agit d'une antenne réceptrice 2 sensiblement plane dont la surface est globalement en forme d'anneau. Elle est formée de plusieurs parties en boucle 2.1, 2.2 sensiblement planes dont la surface est une portion d'anneau, en l'occurrence des demi-anneaux, et ces demi-anneaux sont juxtaposés dans un même plan pour former l'anneau. Le conducteur 9 de chacune des parties en boucle 2.1, 2.2 possède deux portions 1 en fraction de cercle et deux portions radiales m. Ici également deux portions radiales appartenant à des parties en boucle voisines sont séparées par un espace 5 aussi faible que possible.

Sur le zoom de la figure 3B, on a représenté de manière agrandie la connexion des parties en boucle 2.1, 2.2 à l'objet 10 en omettant le moyen de mise en forme pour ne pas surcharger la figure. Des condensateurs d'accord c1, c2 ont été placés en parallèle sur chacune des parties en boucle 2.1, 2.2, ils sont localisés au niveau des extrémités 3 qui sont reliées à l'objet 10.

Cette antenne 2 peut être placée sur un support tournant, par exemple dans le domaine des pneumatiques, elle peut être située sur le flanc du pneumatique. Les portions radiales m pourraient mesurer de 2 à 4 centimètres environ, les portions 1 en fraction de cercle de l'ordre du mètre, l'espace 4 séparant, du côté de l'objet 10, les deux parties en boucle 2.1, 2.2 de 0,5 à 1 centimètre environ et l'espace 5 entre deux portions radiales m de parties en boucle voisines de 0,1 à 0,5 centimètre environ. Dans cet exemple l'objet 10 est localisé dans le flanc du pneumatique ou dans une partie non usante de la bande de roulement.

Dans le domaine des machines tournantes, l'antenne serait solidaire d'une face sensiblement plane d'une pièce rotative, par exemple la face transversale d'un cylindre de laminoir. Ici encore, une telle antenne réceptrice peut se coupler à au moins une antenne émissive de petite taille, ce qui permet au dispositif de réception de coopérer avec un dispositif émissif ayant un faible encombrement. L'accord pourra se faire sur des fréquences de travail plus élevées que celles des dispositifs de réception conventionnels avec la même taille d'antenne réceptrice.

Sur la figure 4, l'antenne réceptrice 2 possède une surface sensiblement plane et circulaire. Elle est formée de plusieurs parties en boucle 2.1, 2.2, 2.3, 2.4 dont la surface correspond à un secteur circulaire, la surface utile s de l'antenne réceptrice étant sensiblement égale à la somme des surfaces s1, s2, s3, s4 des parties en boucle 2.1, 2.2, 2.3, 2.4. Le conducteur 9 des parties en boucle comporte deux portions radiales et une portion en fraction de cercle. Les parties en boucle sont connectées en parallèle à l'objet 1 qui est localisé dans la partie centrale du cercle. Avec une telle configuration, l'antenne réceptrice 2 pourrait comme précédemment être solidaire, par exemple, d'une face transversale d'un cylindre de laminoir ou d'un rouleau utilisé dans l'imprimerie, l'objet 1 pouvant comporter un capteur de vitesse ou d'accélération par exemple.

Sur la figure 5, l'antenne réceptrice 2 est formée de plusieurs parties en boucle 2.1, 2.2, 2.3 qui ne sont pas planes. Chaque partie en boucle est sensiblement rectangulaire lorsqu'elle est mise à plat, sa surface s1, s2, s3 s'étend selon une portion de surface latérale d'un cylindre de directrice ellipsoïdale.

La surface utile s de l'antenne réceptrice 2 occupe également une portion de surface latérale du cylindre à directrice ellipsoïdale. Une telle antenne réceptrice 2 peut être solidaire d'un support cylindrique à directrice ellipsoïdale entraîné dans un mouvement oscillant ou de rotation éventuellement décentré.

Sur la figure 6, l'antenne réceptrice 2 est plane, elle est formée de deux parties en boucle 2.1, 2.2 sensiblement rectangulaires mises bout à bout et reliées en parallèle avec un objet 10 qui se trouve entre elles. Une telle antenne 2 réceptrice et l'objet 10 associé formant le dispositif récepteur 1 peuvent être insérés par exemple dans le sol d'un chemin emprunté par des véhicules V en fin de fabrication. L'objet 10 peut être simplement un compteur ou de manière plus sophistiquée un dispositif d'acquisition de code par exemple. Les véhicules V à compter ou à identifier comportent en tant que dispositif émissif 7 un boîtier électronique B avec une antenne émissive A qui doit se coupler de manière électromagnétique avec l'antenne réceptrice 2. La surface de l'antenne émissive est petite devant celle de l'antenne réceptrice 2. Le mouvement des véhicules et donc du dispositif émissif 7 est une translation au-dessus de l'antenne 2 réceptrice. L'antenne réceptrice 2 est représentée rectangulaire longue et étroite. Les dimensions de sa surface peuvent faire environ 2 mètres par 20 centimètres, tandis que celles de la surface de l'antenne émissive A peuvent être de l'ordre de 20 centimètres par 10 centimètres environ.

Il est possible de multiplier le nombre de parties en boucle pour occuper un plus grand espace de travail si l'antenne émissive ne se déplace plus avec un mouvement rectiligne mais avec un mouvement curviligne.

Bien que plusieurs modes de réalisation de la présente invention aient été représentés et décrits de façon détaillée, on comprendra que différents changements et modifications puissent être apportés sans sortir du cadre de l'invention. Notamment la présente invention n'est pas limitée aux formes d'antennes réceptrices présentées.

## Revendications

1. Antenne réceptrice (2) d'un dispositif de réception (1) qui inclut un objet (10) destiné à être télécontrôlé par couplage électromagnétique avec au moins une antenne émissive (8), cette antenne réceptrice (2) étant destinée à être reliée à l'objet (10), **caractérisée en ce qu'**elle est morcelée en plusieurs parties en boucle (2.1, 2.2) agencées en un montage parallèle, ces parties en boucle (2.1, 2.2) ayant chacune une surface (s1, s2), ces surfaces (s1, s2) étant globalement juxtaposées de manière à ce que les parties en boucle (2.1, 2.2) se couplent successivement et continûment à l'antenne émissive (8).

2. Antenne selon la revendication 1, **caractérisée en ce qu'**elle possède une surface (s) utile de réception qui est sensiblement égale à la somme des surfaces (s1, s2) de toutes les parties en boucle (2.1, 2.2).

3. Antenne selon la revendication 2, **caractérisée en ce que** sa surface (s) est notablement plus grande que celle de l'antenne émissive (8).

4. Antenne selon l'une des revendications 1 à 3, **caractérisée en ce que** les parties en boucle (2.1, 2.2) sont formées d'un conducteur (9), une portion de conducteur d'une première partie en boucle (2.1) et une portion de conducteur d'une seconde partie en boucle (2.2), voisine de la première partie en boucle (2.1), étant séparées par un espace (5) aussi faible que possible.

5. Antenne selon l'une des revendications 1 à 4, **caractérisée en ce que** deux parties en boucle (2.1, 2.2) sont séparées, du côté de l'objet (10), par un espace (4) aussi faible que possible.

6. Antenne selon l'une des revendications 1 à 5, **caractérisée en ce qu'**un condensateur d'accord (c1, c2) est monté en parallèle avec au moins une des parties en boucle (2.1, 2.2) pour accorder la dite partie en boucle (2.1, 2.2) sur l'antenne émissive (8).

7. Dispositif de réception **caractérisé en ce qu'**il comporte au moins une antenne réceptrice (2) selon l'une des revendications 1 à 6.

8. Dispositif de réception selon la revendication 7, **caractérisé en ce que** l'antenne réceptrice (2) est reliée à l'objet (10) par l'intermédiaire d'un moyen de mise en forme (6).

9. Dispositif de réception selon la revendication 8, **caractérisé en ce que** le moyen de mise en forme (6) comporte un circuit redresseur unique (60), les parties en boucle (2.1, 2.2) ayant au moins une extrémité reliée en entrée du circuit redresseur (60), l'objet (10) étant relié en sortie du circuit redresseur (60).

10. Dispositif de réception selon la revendication 8, **caractérisé en ce que** le moyen de mise en forme (6) comporte plusieurs circuits redresseurs (60.1, 60.2), chaque partie en boucle ayant au moins une extrémité reliée en entrée d'un circuit redresseur (60.1, 60.2), les circuits redresseurs (60.1, 60.2) ayant leurs sorties reliées en série avec l'objet (10).

11. Dispositif de réception selon l'une des revendications 7 à 10, **caractérisé en ce qu'**il est animé d'un mouvement relatif par rapport à l'antenne émissive (8).
